(19) Europäisches Patentamt

European Patent Office

Office européen des brevets

(11) **EP 1 511 319 A1**

(12) **EUROPEAN PATENT APPLICATION**

(43) Date of publication:
**02.03.2005 Bulletin 2005/09**

(51) Int Cl.7: **H04N 7/26**, H04N 7/30, H04N 7/50

(21) Application number: **03019871.7**

(22) Date of filing: **01.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **MATSUSHITA ELECTRIC INDUSTRIAL CO., LTD.**
**Kadoma-shi, Osaka 571-8501 (JP)**

(72) Inventors:
• **Schlockermann, Martin**
  **63322 Roedermark (DE)**

• **Wedi, Thomas**
  **30177 Hannover (DE)**
• **Wittmann, Steffen**
  **36119 Neuhof (DE)**
• **Kadono, Shinya**
  **663-8113, Nishinomiya (JP)**

(74) Representative: **Grünecker, Kinkeldey, Stockmair & Schwanhäusser Anwaltssozietät**
**Maximilianstrasse 58**
**80538 München (DE)**

(54) **Film Grain Extraction Filter**

(57)  The present invention provides a method and a filter for extracting film grain information from an input video signal stemming from motion pictures recorded on a photographic film. Standardized transform and quantization steps are applied in order to remove the film grain information from the video input signal and to obtain a local decoded image reconstructing a film grainless video signal. By subtracting the reconstructed video signal from the original video signal, the film grain information is obtained. The film grain extraction can be implemented in a favourable manner within a standardized video encoder.

Fig. 3

## Description

The present invention relates to a method for extracting film grain from motion pictures and to a film grain extraction filter. Particularly, the present invention relates to a method and a filter for extracting film grain information included in video data stemming from photographic motion picture films.

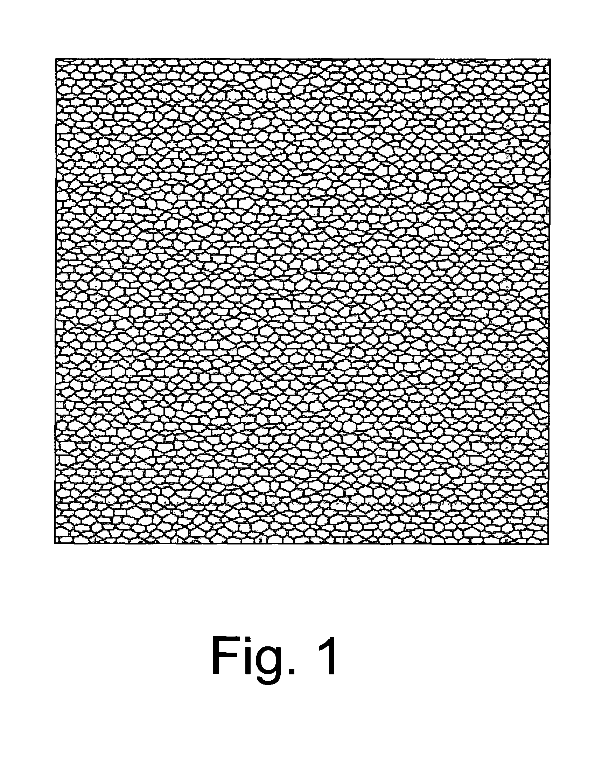

A motion picture film consists of silver-halide crystals which are dispersed within a photographic emulsion of the film. Each image recorded on the photographic film is generated by exposing and developing the silver-halide crystals. In colour images, the silver is chemically removed after development. However, the silver crystal structure remains after development in form of tiny grains of dye. Due to the random form of silver crystals in the emulsion, the grains are randomly formed and distributed within the image. An illustrative example of a grain structure is shown in Fig. 1. The perceivable grain structure is called film grain.

A viewer watching a motion picture reproduction does not recognise the individual grains which have a size of about 0.002 mm down to about a tenth of that size. However, the viewer will perceive groups of grains and identify same as film grain.

When enhancing a resolution of the produced image, the perception of film grain is likewise increased. Specifically, film grain is clearly noticeable in cinema reproductions and in high definition video images. On the other hand, film grain is of less importance for standard television images and even smaller television display formats.

Motion pictures are being adopted in an increasing number of applications, ranging from video telephony and video conference into DVD and Digital television. When motion pictures are being transmitted or recorded, a substantial amount of data has to be sent through conventional transmission channels of limited available frequency bandwidth or has to be stored on conventional storage media of limited data capacity. In order to transmit and store digital data on conventional channels/media, it is inevitable to compress or reduce the volume of digital data.

For the compressing of video data, a plurality of video coding standards has been developed. Such video standards are, for instance, ITU-T standards denoted with H.26x and ISO/IEC standards denoted with MPEG-x. The most up to date and advanced video coding standard is currently the standard denoted as H.264 or denoted as MPEG-4 AVC.

The encoding approach underlying most of these standards consists of the following main stages. Firstly, a video frame is divided into blocks of pixels in order to subject each video frame to a data compression at a block level. Second, spatial redundancies within a video frame are reduced by applying each block of video data to a transform from the spatial domain into the frequency domain, by quantising the resulting transform coefficients, and by entropy encoding the quantised transform coefficients. Further, temporal dependencies between blocks of subsequent frames are exploited in order to only transmit changes between subsequent frames. This is accomplished by employing a motion estimation/compensation technique.

Among various video compression techniques, the so-called hybrid coding technique is known to be most effective. The hybrid coding technique combines temporal and spatial compression techniques together with statistical coding. Most hybrid techniques employ motion compensated Differential Pulse Code Modulation (DPCM), two-dimensional Discrete Coding Transform (DCT), quantisation of DCT coefficients, and Variable Length Coding (VLC). The motion compensated DPCM is a process of determining the movement of an image object between a current frame and a previous frame, and predicting the current frame according to the determined motion to produce differential signals representing the difference between the current frame and its prediction.

One approach for handling film grain information separately form the image content is to remove the film grain information from the video sequence, to parameterise the film grain information based on predefined film grain models, and to transmit statistical film grain parameters to supplement the encoded video data. The film grain parameters can be transmitted in form of Supplemental Enhancement Information (SEI). The Supplemental Enhancement Information mode of current video coding standards includes additional information into the transmitted bit stream in order to offer display capabilities within the coding framework. The SEI information currently provides support for picture freeze, picture snapshots, video segmentation, progressive refinement, and keying. These options are aimed at providing decoder with supporting features and functionalities within the bit stream.

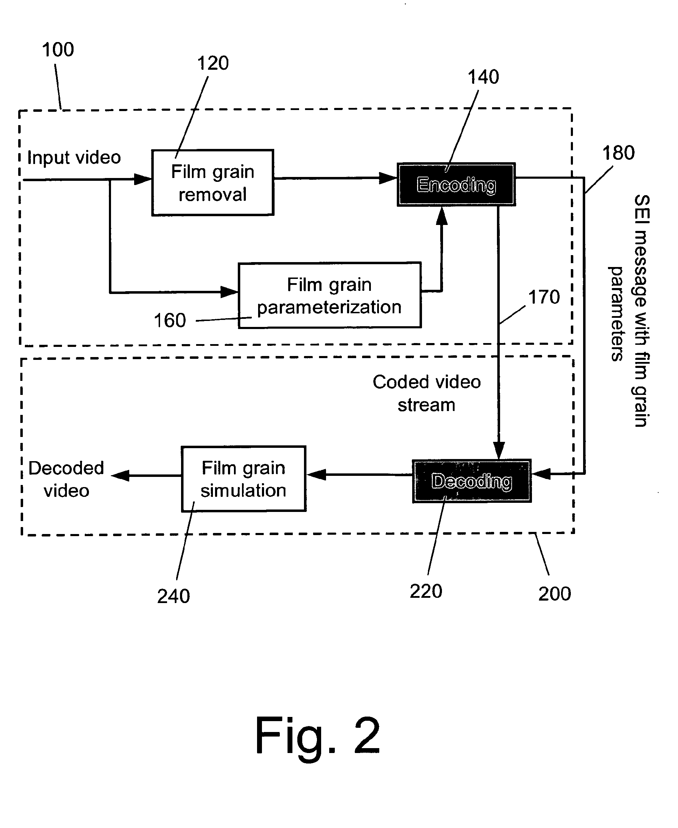

The approach of transmitting statistical parameters for the film grain information is illustrated in Fig. 2. A sequence of video data input to encoder 100 is applied to a film grain removal filter 120 for removing the film grain from the video information. The extracted video information is subjected to a standard video encoding process by video encoder 140. The encoded video data 170 are transmitted as a coded video stream to a corresponding decoder 200.

In current implementations, the film grain removal filter 120 is realised by a motion compensated temporal median filter. As the film grain is of random structure, it can easily be removed from image sequences by employing a temporal median filter as long as there is no motion presence. Video sequences containing motion in the image content require more sophisticated approaches. For this purpose, motion compensated temporal median filter follows the motion from frame to frame and filter the respective image content in order to remove the film grain therefore.

While the video information - without the film grain information - has been encoded in accordance with one of the existing video encoding standards, the film grain information is applied to a film grain parameterization unit 160 in order to parameterize the film grain in accordance with a statistical model thereof.

The film grain parameterization can involve a colour conversion and/or pixel interpolation depending on the original signal format. Typically, film grain is modelled in RGB colour space in order to approximate the colour configuration of colour layers in photographic film. Alternatively, monochromatic film grain can be added to the luminance component in the YUV colour space.

A simple approach to parameterize film grain is to treat a film grain as Gaussian noise added to the image signal. Higher fidelity models of film grain parameterization require the transmission of different parameters for each colour component and/or grain level set.

The resulting film grain parameters are transmitted in form of an SEI message. The SEI message is included into the video bit stream.

The encoded video information 170 and the SEI message with film grain parameters 180 are transmitted to decoding unit 200. The decoding unit comprises a decoder 220 for decoding the video information and a film grain simulator 240. The film grain simulator 240 generates film grain in accordance with the received grain parameters and adds the generated film grain to the decoded video information. In this manner, a decoded stream of video data with film grain overlaid thereon can be reproduced.

The film grain simulation is completely performed at the decoder side. The film grain simulation relies on a predefined model for reproducing film grain over a specific film stock. Alternatively, film grain simulation is done through parameterization of a configurable model. Film grain simulation is performed after the image decoding and prior to image display.

It is a disadvantage of this approach that the film grain information has to be standardised in accordance with a known statistical film grain model in order to obtain respective parameters. Thus, only film grain fitting into the standardised statistical film grain model can be appropriately encoded and transmitted for true decoding and reproduction thereof.

The prior art film grain removal approaches require high computation and hardware complexity. This is particularly due to motion compensated filtering.

Accordingly, it is an object of the present invention to provide an improved method and filter for extracting film grain information.

This is achieved by the subject matter of the independent claims.

Preferred embodiments are the subject matter of dependent claims.

According to a first aspect of the present invention, a method for extracting film grain information from a video signal is provided. A received video input signal is transformed from its spatial representation into a frequency representation and respective transform coefficients are generated. The obtained transformed coefficients are quantized such that film grain information is removed from the underlying video signal. The quantized transform coefficients are de-quantized, and the de-quantized transform coefficients are inversely transformed into a spatial representation. The thus obtained spatial representation is subtracted from the input video signal and the resulting differents signal is output.

According to a further aspect of the present invention, a film grain extraction filter for extracting film grain information from an input video signal is provided. The film grain extraction filter comprises a transform unit, a quantizer, a de-quantizer, an inverse transform unit and a subtractor. The transform unit transforms the input video signal from a spatial representation into a frequency representation and generates respective transform coefficients. The quantizer quantizes the obtained transform coefficients such that film grain information is removed from the underlying video signal. The de-quantizer de-quantizes the quantized transform coefficients and the inverse transform unit transforms de-quanitzed transform coefficients into a spatial representation. The subtractor subtracts the obtained spatial representation from the input video signal and outputs the resulting difference signal.

It is the particular approach of the present invention to employ processing stages for the film grain extraction which are already employed by standard video encoders for a different purpose. By utilising the "lossy" quantization result of existing encoders, the up to now undesired loss of image information can be turned into an advantageous application. The quantization stage of the encoder is adapted such that the lossy effect preserves the image content while fine random structures like image noise and film grain structures are removed therefrom. The image calculated from the quantized transform coefficients does not show the "lost" image parts, namely the film grain structure. The film grain structure can be obtained by subtracting the quantized image from the video input signal.

It is a particular advantage of this approach that the steps required for determining the lossy image are performed by a standardized video encoder. The film grain extraction filter can thus be combined in a favourable manner with standardized video encoders. Hence, the encoding of film grain information separately from the image information can be achieved in a simple manner, only requiring an additional subtractor for subtracting the respective image signals. Existing technologies can be amended in a simple manner to obtain a result currently only achievable by complex additional hardware. The present invention will consequently further reduce the costs of improved motion picture video encoders.

Preferably, the video input signal comprises a plurality of consecutive images. When compressing the image sequence with a standardized video encoder, the film grain can be extracted in a simple manner therefrom, as the required processing steps are already performed by a video encoder for different purposes and can thus be jointly used for both applications, namely the film grain extraction and the video data compression.

Preferably, the image processing is performed on a block basis. This is accomplished by dividing the input image into a plurality of blocks of identical size which are subjected to the transform and quantization steps. The blocks have preferably a size of 4x4, 8x8 or 16x16 pixels. These block sizes enable to apply in a simple manner a transform in order to generate a frequency representation thereof. Preferably, the Discrete Cosine Transform (DCT) is applied.

Preferably, the quantizer and the de-quantizer apply a single quantization parameter to the plurality of transform coefficients. A respective quantization can thus be adjusted in a simple manner by varying the single quantization parameter. Preferably, the quantization parameter takes a value between 15 and 25, most preferably around 20. Such a parameter preserves the image content but eliminates fine random details not being part of the image content of the image input signal.

By performing the processing steps in accordance with respective steps of a video encoder, a motion picture signal can be encoded and film grain extracted therefrom at the same time without requiring additional processing steps. The hardware and the processing is thus considerably simplified compared to prior art approaches.

The above and other objects and features of the present invention will become apparent from the following description and preferred embodiments given in conjunction with the accompanying drawings, in which:

Fig. 1 illustrates an enlarged example of film grain structure;

Fig. 2 schematically illustrates in block diagram form a conventional encoder and a conventional decoder for parameterization of film grain information;

Fig. 3 schematically illustrates the configuration of a film grain extraction filter in accordance with the present invention;

Fig. 4 shows an example of a block of DCT transform coefficients;

Fig. 5 shows an example of a block of quantized transform coefficients;

Fig. 6 schematically shows the configuration of a video encoder for motion picture data of photographic film implementing a film grain extraction filter of the present invention;

Fig. 7 illustrates the configuration of a video encoder including a film grain extractor of the present inventionand

Fig. 8 illustrates a flow chart representing the processing steps for extracting film grain information in accordance with the present invention.

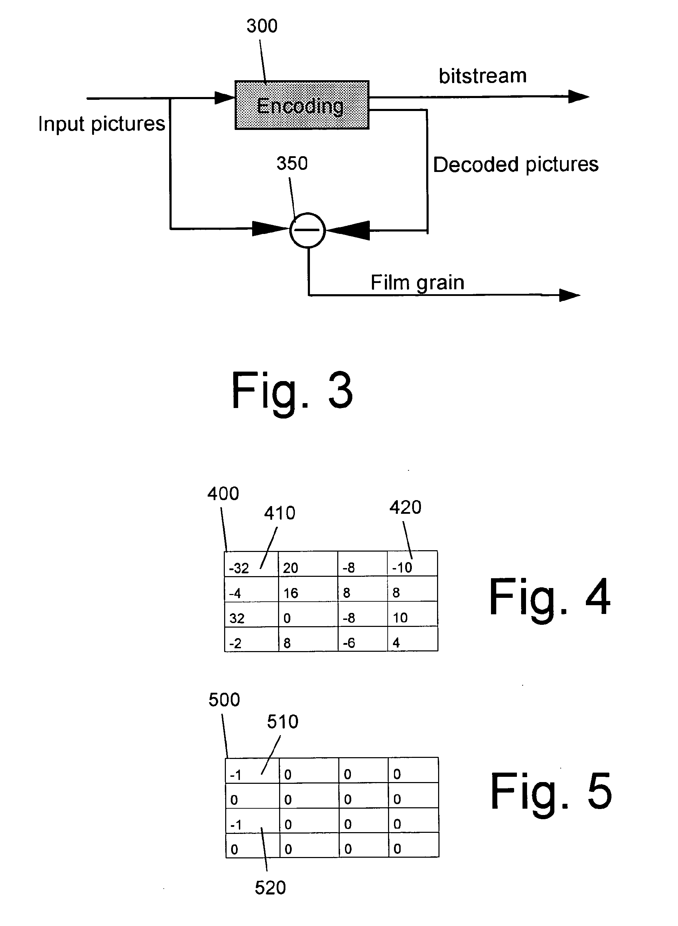

Referring to Fig. 3, the general configuration of a film grain extraction filter for use with a block-based hybrid video coding is illustrated. An input video signal is applied to video encoder 300 and, at the same time, to subtractor 350. Video encoder 300 applies one of a plurality of video coding standards to the received input video signal. Preferably, the video coding standard is one of JPEG, MPEG-1, MPEG-2, H.263, H.264 - MPEG 4 / AVC. During the encoding process, a bit stream of encoded video data is generated and output for being recorded on a storage medium or for being transmitted over a transmission channel.

During the encoding process, a local decoded image is generated and output. The local decoded image represents the image which is also decodable by a video decoder receiving the encoded bit stream. The decoded image has been subjected to a lossy encoding process and, consequently, the fine random structure film grain information has been removed therefrom. Thus, the film grain signal is removed from the image input signal and only the video content has been encoded.

The local decoded image and the current input image are both applied to subtractor 350 in order to generate a difference representing the film grain information. The film grain information can now be separately treated from the image content of the image input signal.

Video encoder 300 is preferably a hybrid video encoder used with a fixed quantization parameter (Qp). The quantization parameter is selected such that only fine random structures like film grain are removed form the underlying video signal and fine image details are preserved and blocking artefacts do not reduce the image quality. When employing the standard video coding technique H.264, a quantization parameter around 20 is used for quantization.

The quanitzation process will be described in more detail with reference to Fig. 4 and Fig. 5. The compression achieved by a standard video encoder is mainly attributed to the quantization of transformed coefficients. This is accomplished by a quantizer. By selecting appropriate quantization parameter, the quantizer can increase the coding efficiency at the expense of a reduced image quality of the reconstructed video image. Thus, an appropriate setting of the quantization parameter is one of the most important aspects of a video encoder.

The quantizer maps the values of transformed coefficients, preferably DCT transform coefficients, to smaller range of values. By reducing the possible range of values, the number of bits required to encode the transform coefficients of one block is reduced. As the quantization process is a lossy process, an identical original pixel value cannot be restored using an inverse quanitzation. A reduced image quality is a result of an improved coding efficiency. By adjusting the quantization parameter of the quantizer, the output bit rate of a block-based video encoder can be adapted.

As mentioned above, the lossy result of the quantization process is favourably used to remove fine noise and film grain from a video signal in accordance with the present invention.

Referring to Fig. 4, a 4x4 block 400 of DCT transform coefficients is shown. The coefficients of Fig. 4 represent an example of an image block of a uniform image content. While the upper left value 410 represents the DC value, the remaining coefficients values 420 represent higher horizontal and vertical frequencies.

In a simple implementation, a quantizer divides each transform coefficient by predetermined quantization parameter. This quantization is described by the following equation;

$$X_{quant} = X_{DCT} / Qp$$

In the above equation $X_{DCT}$ represents the transform coefficients and $X_{quant}$ represents the quantization result. The quantization result only takes the integer part into account while any fractional value is omitted.

By using an increasing value for the quantization parameter Qp, less frequently occurring image frequencies (represented by individual transform coefficients) are removed by zero values as quantization results.

An example of a quantized coefficient matrix is shown in Fig. 5. By employing a quantization parameter between 15 and 25, the quantizatied coefficient matrix 500 of Fig. 5 is generated. As can be seen therefrom, only the DC component 510 and a single high frequency component 520 are maintained.

The quantized coefficient block in Fig. 5 represents an image signal having most high frequency components removed therefrom i.e. noise and film grain information.

According to a preferred embodiment of the present invention, a hybrid block-based video encoder is used to implement the film grain extraction filter for the present invention. The video encoder produces a film grain-less video signal component which is compressed by the encoder. Hence, the encoder can be employed as a "film grain removal filter" by appropriately setting the quantization parameter(s). While fine textures of the image content are preserved, the film grain is removed therefrom.

Preferably, the extracted film grain information is also encoded by employing a video encoder having a similar configuration. In contrast to the encoding of a video data and a removal of film grain information, the encoder for encoding the extracted film grain information has to employ a much lower degree of quantization. Preferably, the quantization parameter is reduced to a fraction of the quantization parameter employed for removing the film grain form the video input signal.

When employing a hybrid block-based video encoder in accordance with the H.264 standard, a quantization parameter of around 20 is used for removing film grain from the image input signal and a quantization parameter of around 4 (preferably between 1 and 10) is employed for quantizing the extracted film grain information.

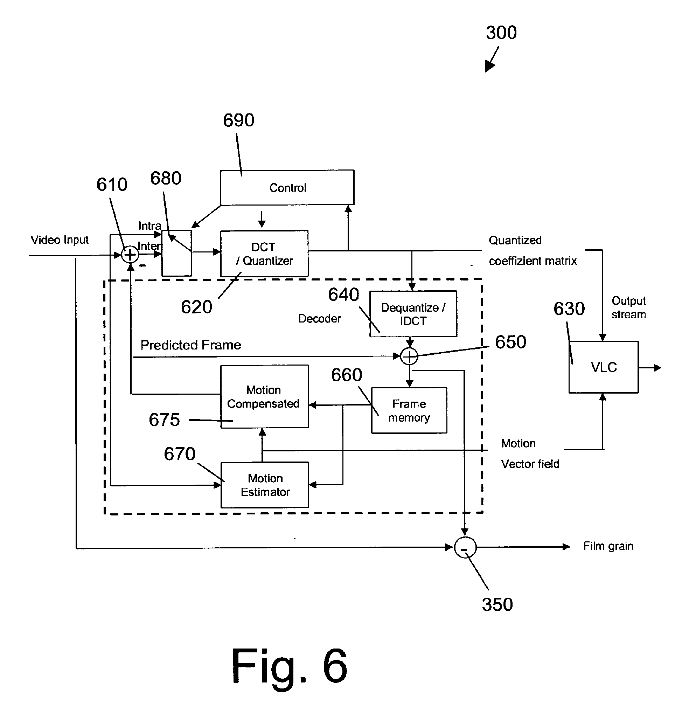

An example of the configuration of a hybrid video encoder is illustrated in Fig. 6. The encoder 300 comprises difference calculation means 610, an intra/inter-switch 680, a DCT and quantizing unit 620, a variable length coding unit 630, a de-quantizer and IDCT unit 640, an adder 650, a frame memory 660, a motion estimator 670 and a motion compensator 675. For controlling the encoding procedure, a control unit 690 is provided to control the operation of the intra/inter-switch 680 and the DCT and quantizing unit 620. The control is performed depending on the output bit rate and the available data capacity.

During operation, the video input signal is treated differently for intra encoding and inter encoding. For intra encoding, i.e. for exploiting temporary redundancies between subsequent images, the video input signal is supplied to difference calculation means 610 in order to subtract a predicted image therefrom. The prediction error is applied to the DCT and quantizing unit 620 via intra/inter-switch 680. In contrast, during intra processing the video input signal is directly applied to the DCT and quantizing unit 620.

DCT and quantizing unit 620 transforms the received video signal on a block basis from the spatial domain into the frequency domain by generating transform coefficients. The transform coefficients are subjected to a quantization process and the resulting quantized coefficient matrix is output to a variable length coding (VLC) unit 630.

A encoding efficiency is improved by employing a predictive encoding approach. This is accomplished by generating from the encoding result a local decoded image. For this purpose, the encoded data, i. e. the quantized transform coefficients, are de-quantized and the de-quantized transform coefficients are inversely transformed in order to obtain a spatial representation of the encoded image underlying the quantized transform coefficients.

The generated image data only represents the differences encoded during picture encoding. In order to obtain the predicted image, the previous image and the obtained difference image are supplied to adder 650. The obtained locally decoded image is stored in frame memory 660.

Motion between images of the sequence of input image is taken into account by estimating the motion between subsequent images in motion estimator 670 and by adjusting the local decoded image accordingly in motion compensator 675. The obtained motion vector or field of motion vectors is also applied to VLC unit 630 and output together with the quantized transform coefficients.

The film grain is obtained from the encoding process by subtracting the local decoded image output from adder 650 from the video input signal in subtractor 350. The film grain signal is output separately and may also be subjected to image encoding.

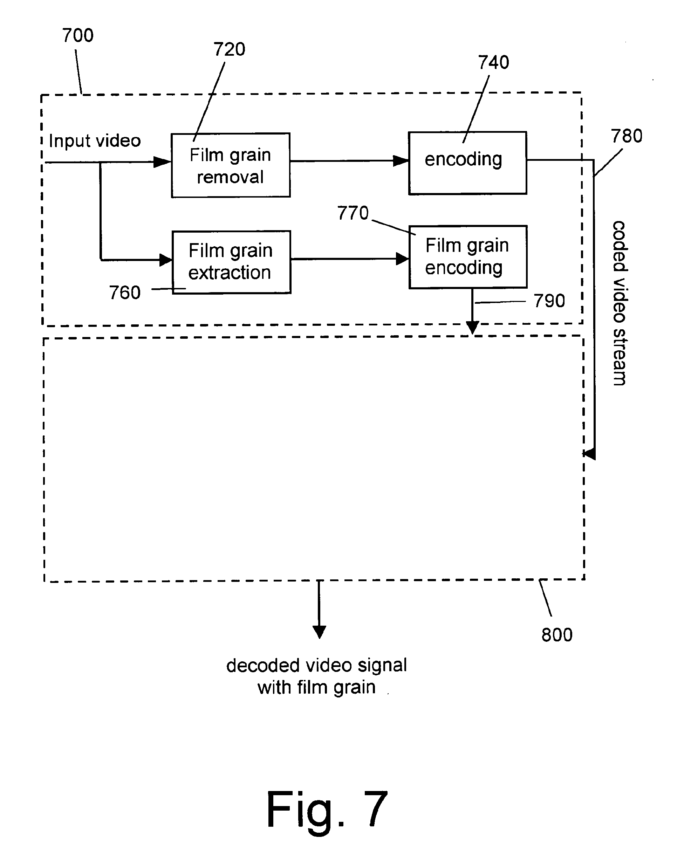

An example for separately encoding video data and film grain information is shown in Fig. 7. The configuration of encoder 700 only schematically illustrates in block diagram form the functional stages to be performed. In accordance with the present invention, these stages can advantageously combined in order to achieve a simplified hardware configuration and to reduce the required computational effort.

The video input signal supplied to encoder 700 is subjected to film grain removal by film grain removal filter 720 in order to obtain an image signal without film grain therein. The image signal without film grain is encoded by encoder 740 outputting the coded video stream 780.

The film grain information is extracted and processed in a separate processing branch. The input video signal is applied to a film grain extraction filter 760 and the extracted film grain information is encoded by film grain encoder 770. The encoded film grain information 790 together with the coded video stream 780 is applied to a decoder 800 to reconstruct the video signal with film grain therein.

Although the processing stages of encoder 700 are shown as separate processing stages, these stages can be processed in combined form by employing a single encoder in accordance with the present invention. As previously described, this is achieved by developing each of these individual stages 720, 740, 760 such that essentially identical processing steps are employed.

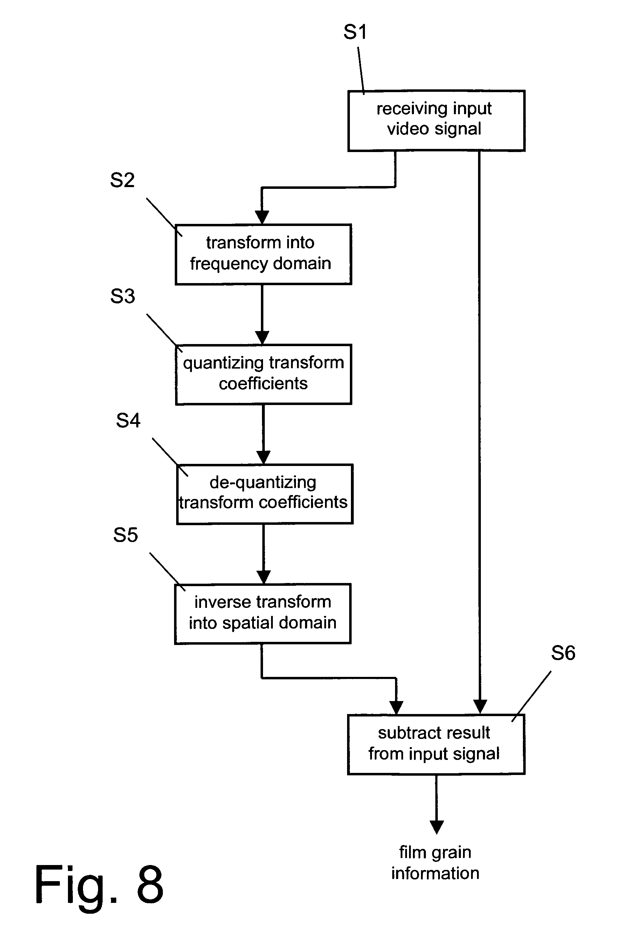

Referring to the flow chart in Fig. 8, a method for extracting film grain information from an input video signal in accordance with the present invention is described. As shown in Fig. 8, motion picture data including film grain information is received in step S1. In a block-based manner, each block of the video input signal is transformed from the spatial domain into the frequency domain and corresponding transform coefficients are generated (cf. step S2). The resulting transform coefficients are quantized in order to remove film grain from the received video input signal by preserving fine image content structures and avoiding any blocking artefacts.

The quantized transform coefficients are de-quantized by applying the same quantization parameter used during quantization step S3 (step S4). The resulting transform coefficients are inversely transformed from the frequency domain into the spatial domain (step S5) in order to obtain a local decoded image block. Preferably, this reconstruction based on de-quantization and IDCT is performed in the local decoding loop of the standardized video encoder.

The local decoded image block is subtracted from the original image block in order to calculate the film grain data (step S6).

Summarising, the present invention provides a method and a filter for extracting film grain information from an input video signal stemming from motion pictures recorded on a photographic film. Standardized transform and quantization steps are applied in order to remove the film grain information from the video input signal and to obtain a local decoded image reconstructing a film grain-less video signal. By subjecting the reconstructed video signal from the original video signal, the film grain information is obtained. The film grain extraction can be implemented in a favourable manner within a standardized video encoder.

**Claims**

1. A method for extracting film grain information from a video signal, comprising the steps of:

   receiving (S1) a video input signal,

   transforming (S2) the received video input signal from a spatial representation into a frequency representation and generating respective transform coefficients,

   quantizing (S3) the obtained transform coefficients such that film grain information is removed from the underlying video signal,

   de-quantizing (S4) the quantized transform coefficients,

   transforming (S5) the de-quantized transform coefficients into a spatial representation,

   subtracting (S6) the obtained spatial representation from the input video signal and outputting the resulting difference signal.

2. A method according to claim 1, wherein said video input signal comprising one or a plurality of consecutive images.

**3.** A method according to claim 1 or 2 wherein said video input signal is processed on a block basis.

**4.** A method according to claim 3, wherein said video input signal being divided into blocks having a size 4x4, 8x8 or 16x16 pixels.

**5.** A method according to any of claims 1 to 4, wherein said transform step (S2) and said inverse transform step (S5) apply a discrete cosine transform.

**6.** A method according to any of claims 1 to 5, wherein said quantizing step (S3) and said de-quantizing step (S4) apply a single quantization parameter to all transform coefficients.

**7.** A method according to claim 6, wherein said quantization parameter being between 15 and 25, preferably around 20.

**8.** A method according to any of claims 1 to 7, wherein said steps of transforming (S2), quantizing (S3), de-quantizing (S4) and inverse transforming (S5) are performed in accordance with the respective steps of a standardized video coding standard.

**9.** A method according to claim 8, wherein said video coding standard being one of JPEG, MPEG-1, MPEG-2, H.263 and H.264 / MPEG-4 AVC.

**10.** A method for encoding an input video signal including video data and film grain information, said method comprising the steps of:

removing film grain information from said input video signal,

encoding said input video signal having film grain information removed therefrom,

extracting film grain information from said input video signal in accordance with the method of any of claims 1 to 9,

wherein the transform, quantizing, de-quantizing and inverse transform steps (S2, S3, S4, S5) as defined in the method of any of claims 1 to 9 are jointly performed by the removing step, the encoding step and the extraction step.

**11.** A film grain extraction filter for extracting film grain information from an input video signal, comprising:

a transform unit (620) for transforming the input video signal from a spatial representation into a frequency representation and for generating respective transform coefficients,

a quantizer (620) for quantizing the obtained transform coefficients such that film grain information is removed from the underlying video signal,

a de-quantizer (640) for de-quantizing the quantized transform coefficients,

an inverse transform unit (640) for transforming the de-quantized transform coefficients into a spatial representation,

a subtractor (350) for subtracting the obtained spatial representation from the input video signal and outputting the resulting difference signal.

**12.** A film grain extraction filter according to claim 11, wherein said video input signal comprising one or a plurality of consecutive images.

**13.** A film grain extraction filter according to claim 11 or 12 wherein said video input signal is processed on a block basis.

**14.** A film grain extraction filter according to claim 13, wherein said video input signal being divided into blocks having a size 4x4, 8x8 or 16x16 pixels.

**15.** A film grain extraction filter according to any of claims 11 to 14, wherein said transform unit (620) and said inverse transform unit (640) unit apply a discrete cosine transform.

**16.** A film grain extraction filter according to any of claims 11 to 15, wherein said quantizer (620) and said de-quantizer (640) apply a single quantization parameter to all transform coefficients.

**17.** A film grain extraction filter according to claim 16, wherein said quantization parameter being between 15 and 25, preferably around 20.

**18.** A film grain extraction filter according to any of claims 11 to 17, wherein said transform unit (620), said quantizer (620), said de-quantizer (640) and said inverse transform unit (640) are adapted to operate in accordance with the respective unit of a standardized video coding standard.

**19.** A film grain extraction filter according to claim 18, wherein said video coding standard being one of JPEG, MPEG-1, MPEG-2, H.263 and H.264 / MPEG-4 AVC.

**20.** An encoding apparatus for encoding an input video signal including video data and film grain information, comprising:

a film grain removal filter (120) for removing film grain information from said input video signal,

an encoding unit (300) for encoding said input video signal having film grain information removed therefrom,

a film grain extraction filter (300, 350) for extracting film grain information from said input video signal in accordance with any of claims 11 to 19,

wherein the transform unit (620), the quantizer (620), the de-quantizer (640) and the inverse transform unit (640) as defined in any of claims 11 to 19 are jointly employed by the film grain removal filter (120), the encoding unit (300) and the film grain extraction unit (300, 350).

# Fig. 1

## Fig. 2

300

Encoding

Input pictures

bitstream

Decoded pictures

350

Film grain

# Fig. 3

400

410

420

| -32 | 20 | -8 | -10 |
| -4 | 16 | 8 | 8 |
| 32 | 0 | -8 | 10 |
| -2 | 8 | -6 | 4 |

# Fig. 4

500

510

| -1 | 0 | 0 | 0 |
| 0 | 0 | 0 | 0 |
| -1 | 0 | 0 | 0 |
| 0 | 0 | 0 | 0 |

# Fig. 5

520

300

690

Control

610    680

Video Input

Intra

Inter

DCT
/ Quantizer

620

Decoder

640

Dequantize /
IDCT

Predicted Frame

650

Motion
Compensated

675

660

Frame
memory

670

Motion
Estimator

Quantized

coeffizient matrix

630

Output
stream

VLC

Motion

Vector field

Film grain

350

# Fig. 6

700

720

740

780

Input video → Film grain removal → encoding

770

Film grain extraction → Film grain encoding

760

790

800

coded video stream

decoded video signal
with film grain

# Fig. 7

S1

receiving input
video signal

S2

transform into
frequency domain

S3

quantizing transform
coefficients

S4

de-quantizing
transform coefficients

S5

inverse transform
into spatial domain

S6

subtract result
from input signal

film grain
information

# Fig. 8

## EUROPEAN SEARCH REPORT

**European Patent Office**

| | Application Number |
|---|---|
| | EP 03 01 9871 |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 779 742 A (RCA THOMSON LICENSING CORP) 18 June 1997 (1997-06-18)<br>* page 3, line 28 - page 7, line 37 *<br>* figure 2 *<br>--- | 1-20 | H04N7/26<br>H04N7/30<br>H04N7/50 |
| X | GHANBARI M: "AN ADAPTED H.261 TWO-LAYER VIDEO CODEC FOR ATM NETWORKS"<br>IEEE TRANSACTIONS ON COMMUNICATIONS, IEEE INC. NEW YORK, US,<br>vol. 40, no. 9,<br>1 September 1992 (1992-09-01), pages 1481-1490, XP000331080<br>ISSN: 0090-6778<br>* page 1481 - page 1482, paragraph II *<br>* figure 2A *<br>--- | 1-20 | |
| A | COMES S ET AL: "POSTPROCESSING OF IMAGES BY FILTERING THE UNMASKED CODING NOISE"<br>IEEE TRANSACTIONS ON IMAGE PROCESSING, IEEE INC. NEW YORK, US,<br>vol. 8, no. 8, August 1999 (1999-08), pages 1050-1061, XP000849116<br>ISSN: 1057-7149<br>* page 1054 - page 1055, paragraph V.B *<br>* figure 5 *<br>--- | 1-20 | **TECHNICAL FIELDS SEARCHED** (Int.Cl.7)<br><br>H04N<br>G06T |
| A | EP 0 823 691 A (AGFA GEVAERT NV) 11 February 1998 (1998-02-11)<br>* page 5, line 4 - page 6, line 2 *<br>* page 7, line 36 - page 11, line 9 *<br>* figure 2 *<br>----- | 1-20 | |

The present search report has been drawn up for all claims

| Place of search | Date of completion of the search | Examiner |
|---|---|---|
| THE HAGUE | 20 January 2004 | Lombardi, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 01 9871

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2004

| Patent document cited in search report | | Publication date | Patent family member(s) | | Publication date |
|---|---|---|---|---|---|
| EP 0779742 | A | 18-06-1997 | US | 6285710 B1 | 04-09-2001 |
| | | | CN | 1155814 A ,B | 30-07-1997 |
| | | | DE | 69620984 D1 | 06-06-2002 |
| | | | DE | 69620984 T2 | 31-10-2002 |
| | | | EP | 0779742 A2 | 18-06-1997 |
| | | | ES | 2176417 T3 | 01-12-2002 |
| | | | JP | 9205652 A | 05-08-1997 |
| | | | RU | 2189700 C2 | 20-09-2002 |
| EP 0823691 | A | 11-02-1998 | EP | 0823691 A1 | 11-02-1998 |
| | | | JP | 10133309 A | 22-05-1998 |
| | | | US | 5832055 A | 03-11-1998 |

EPO FORM P0459

For more details about this annex : see Official Journal of the European Patent Office, No. 12/82